# EUROPEAN PATENT APPLICATION

(11) **EP 4 697 450 A1**
(43) Date of publication of application: **18.02.2026**
(21) Application number: 24223294.0
(22) Date of filing: 26.12.2024
(51) Int. Cl.: H01M 10/613, H01M 50/204, H01M 10/655, H01M 10/625

(54) **BATTERY PACK**

(30) Priority: 13.08.2024 CN 202421963412 U
(71) Applicant: Eve Energy Storage Co., Ltd., Wuhan, Hubei 430000 (CN)
(72) Inventor: MIN, Changfei, Wuhan, Hubei 430000 (CN)
(74) Representative: Herrero & Asociados, S.L.

(57) **Abstract**

A battery pack includes: a battery case body (1), defining a first opening (11) in a side of the battery case body and a second opening (12) in another side of the battery case body opposite to the first opening; a battery module (2), mounted inside the battery case body; a first liquid-cooling plate (3), assembled at the first opening of the battery case body; a second liquid-cooling plate (4), assembled at the second opening of the battery case body; and a CCS assembly (5), disposed between the battery module and the first liquid-cooling plate.

## Description

### TECHNICAL FIELD

The present disclosure relates to the field of batteries, and in particular to a battery pack.

### BACKGROUND

As electric vehicles and energy storage technologies rapidly develop, a charging and discharging power of a battery pack has been increasing to satisfy growth in energy demands. However, charging and discharging at a high power generates a large amount of heat inside the battery pack, and the heat cannot be effectively released, such that a temperature of a cell is significantly increased. In this case, performance of the battery pack is affected, and a service life of the battery pack is seriously shortened.

In the art, in order to dissipate the heat from the battery pack, a layer of liquid-cooling plate is arranged at a top or a bottom of the battery pack, and the generated heat is dissipated by a cooling medium flowing inside the liquid-cooling plate.

In the art, the liquid-cooling plate is arranged only at the top or the bottom of the battery pack, and the battery pack cannot be covered more comprehensively, such that the heat is distributed unevenly, and a heat dissipation effect is poor. In addition, a cover is disposed outside the liquid-cooling plate to improve support strength of the battery pack and to protect the battery pack, however, arrangement of the cover reduces a heat exchanging efficiency, heat dissipation requirements cannot be met.

### SUMMARY OF THE DISCLOSURE

The present disclosure provides a battery pack, including: a battery case body, defining a first opening in a side of the battery case body and a second opening in another side of the battery case body opposite to the first opening; a battery module, mounted inside the battery case body; a first liquid-cooling plate, assembled at the first opening of the battery case body; a second liquid-cooling plate, assembled at the second opening of the battery case body; and a CCS assembly, disposed between the battery module and the first liquid-cooling plate.

According to the present disclosure, a first opening and a second opening are respectively defined in two sides of a battery case body, and a first liquid-cooling plate and a second liquid-cooling plate are arranged corresponding to the first opening and the second opening, respectively. In this way, a battery module is completely covered. In this way, heat generated by the battery module can be uniformly and effectively absorbed and dissipated by the first liquid-cooling plate and the second liquid-cooling plate, preventing the heat from distributing unevenly and improving an overall heat dissipation effect. The cover disposed outside the liquid-cooling plate is omitted, enabling the liquid-cooling plates to be in direct contact with an external environment, such that thermal resistance is reduced, the heat can be transferred to the cooling medium more quickly, and the heat exchanging efficiency is improved. In this way, the heat generated by the battery module being charged and discharged at the high power can be dissipated in time, the battery module can operate within an appropriate operating temperature range.

### BRIEF DESCRIPTION OF THE DRAWINGS

FIG. 1 is a perspective schematic view of a battery pack according to some embodiments of the present disclosure.
FIG. 2 is an exploded view of a portion of the battery pack according to some embodiments of the present disclosure.
FIG. 3 is an exploded view of a first liquid-cooling plate according to some embodiments of the present disclosure.
FIG. 4 is a cross-sectional view of the first liquid-cooling plate according to some embodiments of the present disclosure.
FIG. 5 is another exploded view of a second liquid-cooling plate according to some embodiments of the present disclosure.
FIG. 6 is another cross-sectional view of the second liquid-cooling plate according to some embodiments of the present disclosure.
FIG. 7 is a structural schematic view of a CCS assembly according to some embodiments of the present disclosure.
FIG. 8 is a structural schematic view of a side of a battery case body according to some embodiments of the present disclosure.

Reference numerals in the drawings: 1, battery case body; 11, first opening; 12, second opening; 2, battery module; 3, first liquid-cooling plate; 31, first channel plate; 311, mounting plate; 32, first plane plate; 321, mounting hole; 33, first liquid-cooling channel; 331, first inflow channel; 332, first convergence channel; 333, first outflow channel; 34, reinforcing rib; 35, first cooling medium inlet; 36, first cooling medium outlet; 4, second liquid-cooling plate; 41, second channel plate; 411, support recess; 42, second plane plate; 43, second liquid-cooling channel; 44, diverting rib; 45, spoiler rib; 46, spoiler protrusion; 47, second cooling medium inlet; 48, second cooling medium outlet; 5, CCS assembly; 51, plastic bracket 511, assembling slot; 52, connection piece; 53, collection harness; 6, first heat-conducting structure; 61, heat-conducting pad; 7, second heat-conducting structure; 71, heat-conducting strip; 8, electrical component; 81, fire sprinkler; 82, communication interface; 83, explosion-proof valve; 84, positive-electrode high-voltage connection socket; 85, negative-electrode high-voltage connection socket; 86, battery management unit; 87, fuse; 9, maintenance window.

### DETAILED DESCRIPTION

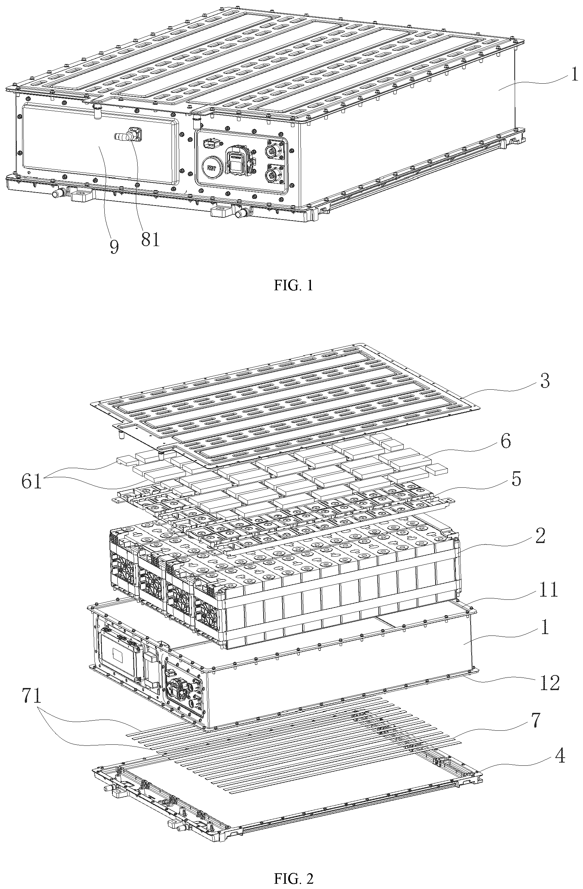

According to an embodiment 1 of the present disclosure, as shown in FIGS. 1-8, a battery pack is provided and includes a battery case body 1, a battery module 2, a first liquid-cooling plate 3, a second-liquid cooling plate 4, and a CCS assembly 5. A first opening 11 is defined in a side of the battery case body 1, and a second opening 12 is defined in another side of the battery case body 1 opposite to the first opening 11. While in use, the first opening 11 is located at a top of the battery pack, and the second opening 12 is located at a bottom of the battery pack. The battery module 2 is mounted inside the battery case body 1 and is fixed in any manner, including but not limited to styrofoam fixation. The battery module 2 is formed a plurality of cells laminated and is wrapped by a steel strip. The first liquid-cooling plate 3 is assembled at the first opening 11 of the battery case body 1, and the second liquid-cooling plate 4 is assembled at the second opening 12 of the battery case body 1. The CCS assembly 5 is disposed between the battery module 2 and the first liquid-cooling plate 3. The CCS assembly 5 includes a plastic bracket 51, a plurality of connection pieces 52, and a collection harness 53. The plastic bracket 51 defines a plurality of assembling slots 511. Each of the plurality of assembling slots 511 receives at least one connection piece 52 of the plurality of connection pieces 52. The collection wire harness 53 is connected to each of the plurality of connection pieces 52. A thickness of each connection piece 52 is not greater than a depth of the respective assembling slot 511. In this way, reliable connection and signal transmission between battery modules can be achieved. By defining the first opening 11 and the second opening 12 respectively at the two sides of the battery case body 1 for assembling the first liquid-cooling plate 3 and the second liquid-cooling plate 4, the battery module 2 is completely covered. In this way, heat is prevented from distributing unevenly, a heat dissipation effect is improved, a cover, which is arranged outside the liquid-cooling plates in the art, is omitted, such that thermal resistance is reduced, and a heat exchanging efficiency is improved.

As shown in FIGS. 2-5, the first liquid-cooling plate 3 located at the top of the battery module 2 includes a first channel plate 31 and a first plane plate 32. The first plane plate 32 is snapped to the first channel plate 31, the first channel plate 31 is located closer to the battery module 2 than the first plane plate 32 is. A plurality of first liquid-cooling channels 33 are formed between the first channel plate 31 and the first plane plate 32. The plurality of first liquid-cooling channels 33 have a first cooling medium inlet 35 and a first cooling medium outlet 36. The first channel plate 31 is arranged with a plurality of mounting plates 311 recessed into the plurality of first liquid-cooling channels 33. The first plane plate 32 defines a plurality of mounting holes 321 corresponding to the plurality of mounting plates 311. Each of the plurality of mounting plates 311 is assembled in a respective one of the plurality of mounting holes 321. The plurality of first liquid-cooling channels 33 are arranged avoiding the plurality of mounting holes 321 and the plurality of mounting plates 311. The plurality of first liquid-cooling channels 33 may be extended to be U-shaped or S-shaped. In the present embodiment, the plurality of first liquid-cooling channels 33 are U-shaped and include a plurality of first inflow channels 331, a first convergence channel 332, and a plurality of first outflow channels 333. The first cooling medium inlet 35 is communicated to the plurality of first inflow channels 331. The first outflow channel 333 is communicated to the plurality of first cooling medium outlets 36. The plurality of first inflow channel 331 are more than one first inflow channels, and the plurality of first outflow channels 333 are more than one first outflow channels. The plurality of first inflow channels are separated from the plurality of first outflow channels by the mounting plate 311. In an embodiment, the plurality of first inflow channels 331 are two first inflow channels 331, and the plurality of first outflow channels 333 are three first outflow channels 333. The plurality of first inflow channels 331 and the plurality of first outflow channels 333 are communicated with each other through the first convergence channel 332. A coolant medium enters from the first coolant medium inlet 35, flows through the plurality of first liquid-cooling channels 33, absorbs the heat of the battery module 2, and then flows out from the first coolant medium outlet 36, such that a complete heat dissipation cycle is formed.

The second liquid-cooling plate 4 disposed at the bottom of the battery module 2 includes a second channel plate 41 and a second plane plate 42. The second plane plate 42 is snapped to the second channel plate 41. The second channel plate 41 is located closer to the battery module 2 than the second plane plate 42 is. A plurality of second liquid-cooling channels 43 are formed between the second channel plate 41 and the second plane plate 42. The plurality of second liquid-cooling channels 43 have a second cooling medium inlet 47 and a second cooling medium outlet 48. The plurality of second liquid-cooling channels 43 may be extended to be U-shaped or S-shaped. In the present embodiment, the plurality of second liquid-cooling channels 43 are S-shaped. In order to enable the cooling medium to flow in the plurality of second liquid-cooling channels 43 more uniformly, a plurality of diverting ribs 44 are arranged, along a length direction of the second channel plate 41, in the plurality of second liquid-cooling channels 43. The plurality of diverting ribs 44 are integrally formed with one of the second channel plate 41 or the second plane plate 42 and abuts against the other one of the second channel plate 41 or the second plane plate 42. In this way, the cooling medium can be distributed more uniformly within the plurality of second liquid-cooling channels 43, a flowing dead zone may be avoided, and heat dissipation performance is improved. The plurality of diverting ribs 44 are arranged to form the plurality of second liquid-cooling channels 43, such as 3 second liquid-cooling channels 43, separated from each other. The cooling medium enters from the second cooling medium inlet 47, flows through the plurality of second liquid-cooling channels 43, absorbs the heat of the battery module 2, and then flows out from the second cooling medium outlet 48, such that a complete heat dissipation cycle is formed.

In other embodiments, a location where the first liquid-cooling plate 3 is arranged and a location where the second liquid-cooling plate 4 is arranged at the battery case body 1 are interchangeable, as long as heat dissipation of the battery module 2 can be achieved from the top and the bottom.

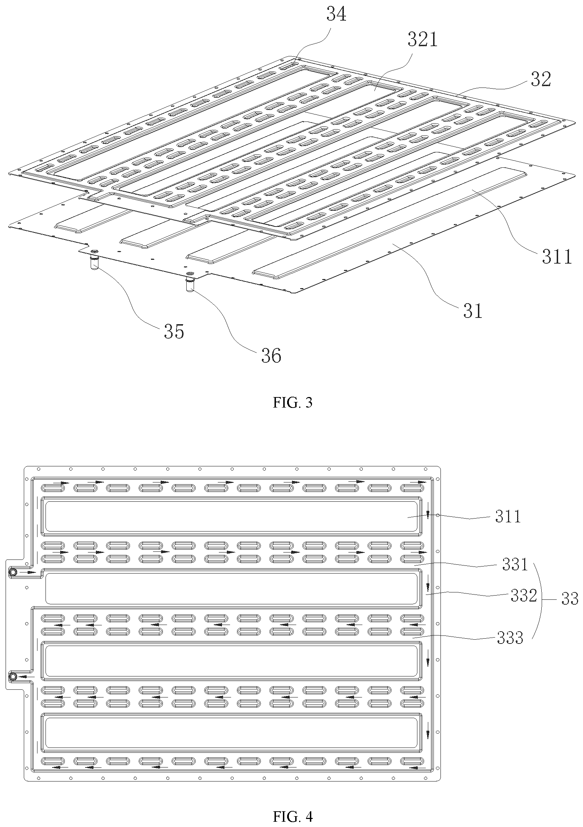

In some embodiments, as shown in FIG. 3, the first liquid-cooling plate 3 is disposed at the top of the battery case body 1, and in order to improve a load-bearing capacity of the top of the battery case body 1, a plurality of reinforcing ribs 34 are arranged on the first plane plate 32 and are recessed towards inside of the plurality of first liquid-cooling channels 33. Alternatively, the plurality of reinforcing ribs 34 are protruding away from the plurality of first liquid-cooling channels 33. Alternatively, the first plane plate 32 is arranged with both the plurality of reinforcing ribs 34 recessed towards inside of the plurality of first liquid-cooling channels 33 and the plurality of reinforcing ribs 34 protruding away from the plurality of first liquid-cooling channels 33. In the present embodiment, only the reinforcing ribs 34 recessed towards the inside of the plurality of first liquid-cooling channels 33 are arranged on the first plane plate 32. In this way, stiffness of a localized region of the first plane plate 32 is increased without increasing an overall thickness of the first plane plate 32. The recessed reinforcing ribs 34 can effectively resist pressure fluctuation caused by flowing of the cooling medium, ensuring stability and sealing performance of the plurality of first liquid-cooling channels 33. In addition, the above configuration reduces turbulence formed from the cooling medium in the plurality of first liquid-cooling channels 33 and improves the heat dissipation efficiency. In other embodiments, when the reinforcing ribs 34 are protruding away from the plurality of first liquid-cooling channels 33, overall strength and stiffness of the first plane plate 32 can be improved. The protruding reinforcing ribs 34 increase a surface area of the first plane plate 32, enabling the first plane plate 32 to be more resistant to an external pressure and impact. In this way, durability and safety of the battery pack in harsh operating environments can be improved. In some embodiments, both the recessed reinforcing ribs 34 and the protruding reinforcing ribs 34 may be arranged, which will not be specifically limited herein.

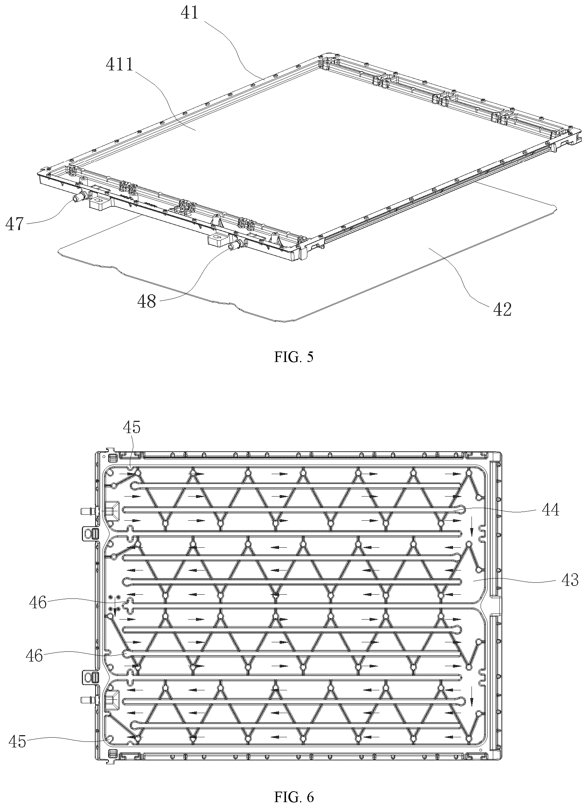

In some embodiments, as shown in FIGS. 5-6, the second liquid-cooling plate 4 is disposed at the bottom of the battery case body 1. In order to improve the heat dissipation effect at the bottom of the battery case body 1, a plurality of spoiler ribs 45 are arranged in the plurality of second liquid-cooling channels 43 extending toward the plurality of diverting ribs 44. Alternatively, at least one of the plurality of diverting ribs 44 is arranged with a spoiler protrusion 46. Alternatively, both a spoiler protrusion 46 and a spoiler rib 45 are arranged in the plurality of second liquid-cooling channels 43. In the present embodiment, both the spoiler ribs 45 and the spoiler protrusions 46 are arranged. In this way, a flowing state of the cooling medium in the plurality of second liquid-cooling channels 43 is improved, improving a turbulence effect and improving the heat dissipation performance. In other embodiments, the spoiler protrusion 46 and the spoiler rib 45 may be arranged in the first liquid-cooling plate 3, as long as a turbulent flow effect can be achieved.

A shape of each spoiler rib 45 and a shape of each spoiler protrusion 46 are not specifically limited, which may be strip-shaped, semi-circular, spherical, or in other shapes, as long as the turbulent flow effect can be achieved.

In order to improve the heat dissipation effect of the battery pack, as shown in FIG. 2, a first heat-conducting structure 6 is disposed between the first liquid-cooling plate 3 and the CCS assembly 5. Alternatively, a second heat-conducting structure 7 is disposed between the second liquid-cooling plate 4 and the battery module 2. Alternatively, the first heat-conducting structure 6 is disposed between the first liquid-cooling plate 3 and the CCS assembly 5, and at the same time, the second heat-conducting structure 7 is disposed between the second liquid-cooling plate 4 and the battery module 2. In the present embodiment, the first heat-conducting structure 6 and the second heat-conducting structure 7 are arranged to optimize a heat conduction path and reduce thermal resistance, ensuring that the heat generated by the battery module 2 can be rapidly and efficiently transferred to the first liquid-cooling plate and the second liquid-cooling plate and can be dissipated away by the cooling medium. In this way, the battery module 2 is kept operating within a suitable temperature range, the performance and the service life of the battery module 2 can be improved, and the battery pack is ensured to operate safely and stably.

In the present embodiment, both the first heat-conducting structure 6 and the second heat-conducting structure 7 are arranged. The first heat-conducting structure 6 includes a plurality of heat-conducting pads 61, each of the plurality of heat-conducting pads 61 is arranged in a respective one of the plurality of assembly slots 511. A side of each of the plurality of heat-conducting pads 61 is in contact with a respective one of the plurality of connection pieces 52 in the respective one of the plurality of assembly slots 511, and the other side of each of the plurality of heat-conducting pads 61 is in contact with the first liquid-cooling plate 3. In this way, it is ensured that heat generated by each of the plurality of connection pieces 52 can be effectively transferred to the first liquid-cooling plate 3 via the respective one of the plurality of heat-conducting pads 61. In an embodiment, an area of each of the plurality of heat-conducting pads 61 is comparable to an area of the respective one of the plurality of assembly slots 511. A side of the second liquid-cooling plate 4 facing the battery module 2 defines a support recess 411. That is, the support recess 411 is defined in the second channel plate 41. The battery module 2 is assembled in the support recess 411. The contact ensures stability of the battery module 2 and improves a heat conducting efficiency.

In an embodiment, the second heat-conducting structure 7 includes a plurality of heat-conducting strips 71. The plurality of heat-conducting strips 71 are received in the support recess 411 and are spaced apart from each other. Each of the plurality of heat-conducting strips 71 is extending along a length direction of the second liquid-cooling plate 4. The plurality of heat-conducting strips 71 abut against both the battery module 2 and the second channel plate 41 of the second liquid-cooling plate 4. It is ensured that the heat of the battery module 2 can be uniformly distributed and effectively transmitted, the heat can be conducted from the battery module 2 to the second liquid-cooling plate 4 highly efficiently, and the heat dissipation effect is improved. In an embodiment, a thickness of each heat-conducting strip 71 is less than a depth of the support recess 411, ensuring that the heat-conducting strips 71 can be completely embedded in the support recess 411 to be closely attached to the battery module 2 and the second liquid-cooling plate 4. In this way, thermal resistance is reduced, and the heat conducting efficiency is improved. In an embodiment, each of the first heat-conducting structure 6 and the second heat-conducting structure 7 is a heat-conducting adhesive.

In other embodiments, the first heat-conducting structure 6 and the second heat-conducting structure 7 may be arranged separately from each other, and a specific structure of each of the first heat-conducting structure 6 and the second heat-conducting structure 7 is not specifically limited, as long as ideal heat conduction can be achieved.

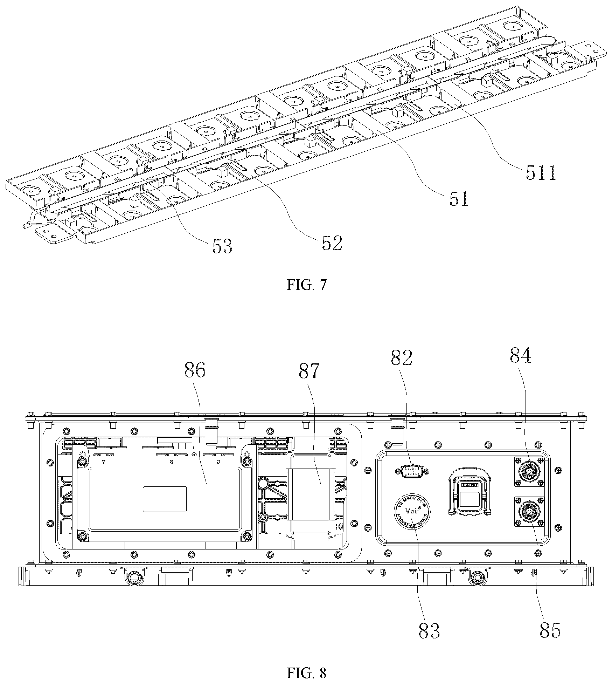

In some embodiments, as shown in FIGS. 1 and 8, in order to improve maintenance of the battery pack, a maintenance window 9 is defined in a battery housing. The battery housing is arranged with electrical components 8. The electrical components 8 include a fire sprinkler 81, a communication interface 82, an explosion-proof valve 83, a positive-electrode high-voltage connection socket 84, a negative-electrode high-voltage connection socket 85, a battery management unit 86 and a fuse 87. The battery management unit 86 and the fuse 87 are covered by the maintenance window 9 and can be removed for maintenance or replaced when the battery pack needs to be serviced.

The battery pack provided by the present disclosure has the following technical characteristics:
1. By defining the first opening 11 and the second opening 12 respectively in the two sides of the battery case body 1 and assembling the first liquid-cooling plate 3 and the second liquid-cooling plate 4 correspondingly, the battery module 2 are completely covered. In this way, the heat generated by the battery module 2 can be uniformly and effectively absorbed and dissipated away by the liquid-cooling plates, such that uneven heat distribution is prevented, and an overall heat dissipation effect is improved.
2. The cover, which is disposed outside the liquid-cooling plates in the art, is omitted, and the liquid-cooling plates directly contact the external environment, the thermal resistance is reduced, e heat can be transferred to the cooling medium more rapidly, and the heat exchanging efficiency is improved. In this way, the heat, which is generated by the battery module 2 during charging and discharging at the high power, can be dissipated in time, the battery module 2 is kept operating within a suitable temperature range.

## Claims

1. A battery pack, comprising:
a battery case body (1), defining a first opening (11) in a side of the battery case body (1) and a second opening (12) in another side of the battery case body (1) opposite to the first opening (11);
a battery module (2), mounted inside the battery case body (1);
a first liquid-cooling plate (3), assembled at the first opening (11) of the battery case body (1);
a second liquid-cooling plate (4), assembled at the second opening (12) of the battery case body (1);
a CCS assembly (5), disposed between the battery module (2) and the first liquid-cooling plate (3).

2. The battery pack according to claim 1, wherein, the first liquid-cooling plate (3) comprises:
a first channel plate (31); and
a first plane plate (32), snapped to the first channel plate (31), wherein a plurality of first liquid-cooling channels (33) are formed between the first channel plate (31) and the first plane plate (32); the plurality of first liquid-cooling channels (33) have a first cooling medium inlet (35) and a first cooling medium outlet (36).

3. The battery pack according to claim 2, wherein, the first channel plate (31) is arranged with a plurality of mounting plates (311) recessed into the plurality of first liquid-cooling channels (33); the first plane plate (32) defines a plurality of mounting holes (321) corresponding to the plurality of mounting plates (311); each of the plurality of mounting plates (311) is assembled in a respective one of the plurality of mounting holes (321).

4. The battery pack according to claim 2, wherein,
a plurality of reinforcing ribs (34) are arranged on the first plane plate (32) and are recessed towards inside of the plurality of first liquid-cooling channels (33); or
a plurality of reinforcing ribs (34) arranged on the first plane plate (32) and are protruding away from the plurality of first liquid-cooling channels (33); or
the first plane plate (32) is arranged with both a plurality of reinforcing ribs (34) recessed towards inside of the plurality of first liquid-cooling channels (33) and a plurality of reinforcing ribs (34) protruding away from the plurality of first liquid-cooling channels (33).

5. The battery pack according to claim 1, wherein, the second liquid-cooling plate (4) comprises:
a second channel plate (41); and
a second plane plate (42), snapped to the second channel plate (41); wherein a plurality of second liquid-cooling channels (43) are formed between the second channel plate (41) and the second plane plate (42); the plurality of second liquid-cooling channels (43) have a second cooling medium inlet (47) and a second cooling medium outlet (48).

6. The battery pack according to claim 5, wherein, a plurality of diverting ribs (44) are arranged, along a length direction of the second channel plate (41), in the plurality of second liquid-cooling channels (43).

7. The battery pack according to claim 6, wherein,
a plurality of spoiler ribs (45) are arranged in the plurality of second liquid-cooling channels (43) and are extending toward the plurality of diverting ribs (44); or
at least one of the plurality of diverting ribs (44) is arranged with a spoiler protrusion (46); or
both a plurality of spoiler protrusions (46) and a plurality of spoiler ribs (45) are arranged in the plurality of second liquid-cooling channels (43), the plurality of spoiler ribs (45) are extending toward the plurality of diverting ribs (44), and the plurality of spoiler ribs (45) are arranged on at least one of the plurality of diverting ribs (44).

8. The battery pack according to any one of claims 1 to 7, wherein
a first heat-conducting structure (6) is disposed between the first liquid-cooling plate (3) and the CCS assembly (5); or
a second heat-conducting structure (7) is disposed between the second liquid-cooling plate (4) and the battery module (2); or
a first heat-conducting structure (6) is disposed between the first liquid-cooling plate (3) and the CCS assembly (5), and at the same time, a second heat-conducting structure (7) is disposed between the second liquid-cooling plate (4) and the battery module (2).

9. The battery pack according to claim 8, wherein the CCS assembly (5) comprises:
a plastic bracket (51), defining a plurality of assembling slots (511);
a plurality of connection pieces (52), each of the plurality of assembling slots (511) receives at least one connection piece of the plurality of connection pieces (52);
a collection harness (53), connected to each of the plurality of connection pieces (52);
wherein a thickness of each of the plurality of connection pieces (52) is not greater than a depth of a respective one of the plurality of assembling slots (511).

10. The battery pack according to claim 9, wherein the first heat-conducting structure (6) comprises a plurality of heat-conducting pads (61), each of the plurality of heat-conducting pads (61) is arranged in a respective one of the plurality of assembly slots; a side of each of the plurality of heat-conducting pads (61) is in contact with a respective one of the plurality of connection pieces (52) in the respective one of the plurality of assembly slots, and the other side of each of the plurality of heat-conducting pads (61) is in contact with the first liquid-cooling plate (3).

11. The battery pack according to claim 8, wherein a side of the second liquid-cooling plate (4) facing the battery module (2) defines a support recess (411); the battery module (2) is assembled in the support recess (411).

12. The battery pack according to claim 11, wherein, the second heat-conducting structure (7) comprises a plurality of heat-conducting strips (711); the plurality of heat-conducting strips (711) are spaced apart from each other; each of the plurality of heat-conducting strips (711) is extending along a length direction of the second liquid-cooling plate (4).

13. The battery pack according to claim 12, wherein a thickness of each of the plurality of heat-conducting strips (711) is less than a depth of the support recess (411).

14. The battery pack according to any one of claims 1 to 7, wherein a maintenance window (9) is defined in the battery module (2).
